# EUROPEAN PATENT APPLICATION

(11) **EP 2 862 619 A1**
(43) Date of publication of application: **22.04.2015**
(21) Application number: 13460070.9
(22) Date of filing: 21.10.2013
(51) Int. Cl.: B01D 53/32

(54) **A method of disociation of exhaust gases, in particular of gases containing carbon dioxide (CO2) and a reactor chamber**

(71) Applicant: IMIS Spolka z ograniczona, 30-698 Krakow (PL)
(72) Inventor: Pietrasz, Andrzej, 43-180 Orzesze (PL); Kamusinski, Wladyslaw, 30-698 Kraków (PL); Wdowczyk, Lukasz, 32-200 Miechów (PL); Pawlikowski, Maciej, 31-432 Kraków (PL)
(74) Representative: Karczmitowicz, Teresa Ewa

(57) **Abstract**

A method of dissociation of exhaust gases, in particular of gases containing carbon dioxide (CO₂), is characterized in that the exhaust gases are directed into the reactor chamber (B) provided with the electrodes (2) and are subjected to electric discharges causing their dissociation. Solids obtained from dissociated gases are collected at the bottom of the reactor chamber (B). The electric discharges occur between the pairs of electrodes or between the electrodes (2) and the metallic housing (1) of the reactor chamber. The electrodes (2) are mounted inside this housing (1) and are isolated from it. They are built from cylinders with the first ends (3) mounted separately to the housing (1), in particular with snap, or threaded, or push-in joints, and the second ends (6) provided with the wire brushes (5). The connectors (4) at the first ends of the electrodes (2) are connected in series to the voltage source (Z). Distance between the electrodes is comprised in a range from 50 mm to 200 mm. The electric discharges are generated by the voltage comprised in a range from 10 MV to 150 MV, preferably from 100 MV to 120 MV, and the electric current is comprised in a range from 5 mA do 100 mA, preferably from 20 mA to 60 mA, with frequency comprised in a range from 3 to 50 discharges per second. The housing (1) is made from a corrosion-resistant metal, preferably austenitic stainless steels with high content of chromium, and preferably coated with titanium. Pressure of the exhaust gases at the input (A) of the reactor chamber (B) is higher than atmospheric pressure by 0.1 MPa to 1.0 MPa. The solids are collected in a container (D), e.g. a drawer which is emptied automatically, in preset time intervals or when full, or if decrease of efficiency of dissociation has been detected. The reactor chambers can be connected in serial chains, or in parallel. The substances that have not been dissociated can be recycled into the reactor chambers.

## Description

Proposed invention refers to a method of dissociation of exhaust gases, in particular of gases containing carbon dioxide (CO₂), and a reactor chamber for dissociation of the exhaust gases.

Carbon dioxide (CO₂) is an extremely important compound for the nature. Its excess, however, has a strong effect on global warming. Rapid increase in the global consumption of organic fuels produces proportional increase of CO₂ content in the atmosphere. The equilibrium between CO₂ and O₂ is being disrupted resulting in global temperature increase.

Capture and safe storage of carbon dioxide is at present based on membrane methods and methods with the use of solid or liquid adsorbents.

Other methods of CO₂ utilization may consist in its catalytic conversion into useful chemical products. This method, however, allows for the use of only a small portion of carbon dioxide formed in the processes of combustion of fuels for energy generation.

Development work aimed at devising processes for efficient reduction of carbon dioxide emissions includes, for instance:
- processes of CO₂ capture prior to the combustion process, where solid fuels are converted into synthesis gas, and then the gaseous fuel - synthesis gas from coal or natural gas - is converted in an exchange reaction into readily separable streams of CO₂ and hydrogen. Hydrogen may then be used to generate electricity or as a fuel in fuel cells, and the CO₂ stream can be converted into a form which is convenient for storage or sequestration;
- processes of fuel combustion in oxygen-enriched atmosphere, where air is replaced with oxygen. As a result the formed combustion gases are composed mainly of H₂O and carbon dioxide, where the latter, after condensing water vapour, can be captured easily;
- processes of co-burning solid fuels and biomass, where carbon dioxide emission is reduced by replacing a portion of the energy stream originating from primary fuel with biomass.

Apart from water (H₂O) in gaseous state, the exhaust gases produced in combustion processes, contain various chemical compounds. The most of them are hazardous to the environment, in particular nitric oxides (NO_{X}), dioxins and carbon dioxide (CO₂). Several methods of processing of the exhaust gases have been proposed, focused particularly on CO₂. The methods based on dissociation of gases are especially interesting, because poisonous compounds like dioxins, nitric oxides and carbon monoxide can be decomposed into elements.

In Japanese patent application JPS56130208 A (Iwasaki Y., Fukui K., 13.10.1981) a waste gas treatment apparatus is proposed, where the waste gas is conducted through a series of zones each with one electrode, and where electrodissociation and ionisation of gases is induced by electric discharges beween the electrodes. High voltage is impressed across the electrodes by a power source so that the waste gas is conducted to the three consecutive discharge electric fields. Spark discharge is caused consecutively across first pair of neighbor electrodes, then across second pair, etc. The exhaust gas to be treated is conducted through a lead-in port, then the gas goes through spirally shaped passages, and exhausts through an exhaust port.

In another Japanese patent application JPS54156277 A (Tanaka M., Ikeda A., 10.12.1979) an electrospark type gas treating system with low pressure loss owing to the flow of treated gas, and capable of treating a large flow of gas is disclosed. When a DC voltage of several kilovolts to several tens of kilovolts is applied on the clearance between a discharge wire and a metallic cylindrical earth electrode, light glow discharge called corona discharge is caused only at the range of intensified electric field in the vicinity of the discharge wire. The gas introduced through an inlet is subject to the electronic impact of discharge to activate or dissociate. In this gas treating system, a dielectric is fitted between both electrodes to prevent discharge from generating spark which effect short circuit when discharge range is expanded by applying higher voltages. Thereby, discharge range can be expanded considerably and very stabilized discharge can be obtained with relatively low voltage applied.

An improved process and apparatus for the production of carbon by the dissociation of gases is proposed in a patent document GB340235 A (Percival S. et al., 12.12.1930). According to this disclosure soot is obtained by the splitting of gases such as acetylene in pressure vessels in which they are ignited and into which they are forced by a compressor consisting of high and low pressure and intermediate working cylinders. The hydrogen formed by the decomposition serves to tear off deposited carbon from the walls of the tubes by its whirling motion on opening the release valve, and this is afterwards exhausted from a settling vessel into a storage tank. The dissociation tubes are provided at each end with stop valves. The gas to be treated is drawn into a low-pressure cylinder in which moves a piston secured on a rod on which are also mounted the piston of a high-pressure cylinder and that of an intermediate actuating cylinder. The ignition chamber is provided with a sparking plug and a soot-removing scraper. After charging the chamber and ignition of the gas, excess of pressure is reduced by allowing the hydrogen formed to blow off into a reservoir. The hydrogen still under pressure in the tube is then allowed to flow out through a pipe into a soot collector.

The Korean patent application KR20130035420 A1 (Kim Sun J., 09.04.2013) deals with dissociation of gaseous CO₂ with a low temperature plasma unit. The low temperature plasma is generated by using arc, glow or corona discharge through the dielectric barrier. The electrode for generating plasma is a needle, plate, mesh, chamber or nozzle. The gases ionized in the dissociation apparatus are separated in the magnetic field and those not dissociated are returned to the combustion furnace or cylinder.

In the international patent application WO2012131703 A2 (Malve A., Tamboli U., 04.10.2012) a process of cyclic thermochemical dissociation of oxides catalyzed by a metal compound is disclosed. The metal compound has a general structural formula MX, wherein M is a metal; X is none (i.e. the case of pure metal), or oxygen, or halogen, the latter two present in moles equivalent to M. The process comprises at least a step of recovering anhydrous metal halide from a process stream and recycling the metal halide or thermally decomposing the same to metal and halogen for recycling. The oxide selected for dissociation may be carbon-dioxide or water. After dissociation of oxides, the products of the reaction undergo a series of reactions comprising a reaction with a halogen, formation of metal halides and oxyhalides as intermediates, thermal decomposition of metal oxyhalides to recover metal oxides and Iodine for recycle, recovery of metal halides for recycle and thermal decomposition of metal halides to metal and halogen for recycle in the said cyclic process.

American patent application US2013048506 A1 (Chen E., US) 28.02.2013 describes porous metal dendrites as gas diffusion electrodes for high efficiency aqueous reduction of CO₂ to hydrocarbons. An electrolytic cell system to convert carbon dioxide to a hydrocarbon includes a first electrode including a substrate having a metal porous dendritic structure applied thereon; a second electrode, and an electrical input adapted for coupling to a source of electricity, for applying a voltage across the first electrode and the second electrode. The metals of porous dendritic structure indicated in embodiments included: platinum, gold, silver, zinc, cobalt, nickel, tin, palladium and copper.

In one of the embodiments the electrode coating was made of copper, copper foil, glassy carbon or titanium. The first and/or second electrode can be at least partially saturated with carbon dioxide.

The electrolytic cell system can further include an electrolyte introduced into a region in between the first electrode and the second electrode. The electrolyte used may be a bicarbonate salt (e.g. potassium hydrogen carbonate), sodium chloride, carbonic acid, or methanol.

The electrolytic cell system can include a membrane to dissolve carbon dioxide in the electrolyte; in an alternative embodiment, the electrolytic cell system includes a conduit to pass carbon dioxide directly to the surface of the first electrode.

The method of preparing the electrodes consists in the use of porphyrin complexes as the electrolytic cell.

Analysis of the state-of-the-art shows that for dissociation of gases produced in combustion of various fuels, mainly chemical methods have been proposed for treatment of CO₂. Alternative physicochemical methods require breaking of very strong covalent bounds between carbon and oxygen. None of the above mentioned methods and devices can be used for efficient and economical in energy usage dissociation of the exhaust gases.

In the proposed method of dissociating gases formed in combustion processes, in particular those containing CO₂, the stream of combustion gases flowing across the reactor chamber is subjected to bombardment with electric discharges. The energy released during controlled discharges causes the breaking of interatomic bonds between oxygen and carbon. The energy of discharges must satisfy the necessary condition for CO₂ molecule dissociation, that is disintegration into components and moving apart to cease interaction between the components. It therefore should be in the range between the binding energy of atoms in a carbon dioxide molecule (ca.1070 kJ/mole) and the enthalpy of formation, that is the energy required to form a CO₂ system (ca. 1650 kJ/mole). The dissociation of combustion gases, in particular of CO₂, according to the invention, is effected by bombardment with electrical charges of high frequency.

Processes that proceed during an electrical discharge lead to: excitation of molecules or cleavage of molecular bonds followed by the relaxation of the molecules or fragments thereof to lower energy levels, ionization and recombination of ions and electrons. When a dielectric, in this case combustion gas containing CO₂, passes through the medium, the electron undergoes multiple collisions with the atoms of the gas, during which the energy of the electron is transferred onto the gas atoms. In effect the gas molecules are ionized, excited and their kinetic energy is changed.

According to proposed invention, proposed method of dissociation of exhaust gases, in particular of gases containing carbon dioxide (CO₂), is characterized in that the exhaust gases are directed into the reactor chamber provided with the electrodes and are subjected to electric discharges causing their dissociation, and the solids obtained from dissociated gases are collected at the bottom of the reactor chamber.

In first variant of the method the electric discharges occur between the pairs of electrodes. In another, recommended variant of the method the electric discharges occur between the electrodes and the metallic housing of the reactor chamber. The electric discharges are generated by the voltage comprised in a range from 10 MV (megavolts) to 150 MV, preferably from 100 MV to 120 MV, which is constant throughout the procedure. For comparison, voltage of 10 kV can trigger a 1 cm long spark in dry air. The electric current is comprised in a range from 5 mA (milliamperes) do 100 mA, preferably from 20 mA to 60 mA. Preferably the frequency of the electric discharges is comprised in a range from 3 to 50 discharges per second.

The exhaust gases supplied to the reactor chamber are compressed so that the pressure of these gases at the input of the reactor chamber is higher than the atmospheric pressure by 0.1 MPa to 1.0 MPa. At higher pressure the gas density is proportionally higher, so the ionization density is also higher.

The elements which under normal conditions are in solid state fall to the bottom of the reactor chamber. In particular this is carbon in the form of soot. The solids are collected in a container, e.g. a drawer which is emptied automatically, in preset time intervals or when full, or if decrease of efficiency of dissociation has been detected.

Depending on requirements of the process the reactor chambers can be connected in serial chains. Alternatively the individual reactor chambers or the chains of serially connected reactor chambers are connected in parallel. The reactor chambers are connected by the serial connectors if connected in series, or by parallel connectors if connected in parallel.

If after the dissociation process the treated gases still contain substances that have not been dissociated, these can be recycled into the reactor chambers.

The electrodes are mounted inside the housing of the reactor chamber and isolated from this housing. Preferably the electrodes are connected in series.

The electrodes are built from cylinders with the first ends mounted separately to the reactor chamber housing, in particular with snap, or threaded, or push-in joints, and the second ends provided with an isolating element and the wire brushes. The connectors at the first ends of the electrodes are connected to the voltage source.

The housing of the reactor chamber is made from a corrosion-resistant metal, preferably austenitic stainless steels with high content of chromium. In recommended embodiment the housing is coated with titanium to protect the housing against corrosion.

It was found that the best results of the electro-dissociation procedure are obtained if the distance between the electrodes is comprised in a range from 50 mm to 200 mm. Generally the higher is the voltage, the bigger should be the distance between the electrodes.

The electrodes are isolated from the housing of the reactor chamber with dielectric material which can be for example:
- thermoplastics, e.g.: polyethylene, polypropylene, polystyrene, polycarbonates and other polyesters, polyvinyl chloride, polytetrafluoroethylene, other;
- duroplastics, e.g.: bakelite and other phenol-formaldehyde resins, epoxy resins, cured silicone resins;
- fusible dielectrics, e.g.: various insulating glasses;
- fired dielectrics, e.g.: porcelain, stoneware, refractory oxides, special ceramics;
- solid dielectrics with special polarizability: ferroelectrics, electrets, piezoelectrics, pyroelectrics.

Insulation of the reactor protects against uncontrolled electrical discharges.

Electrical discharge in a gas compressed to a pressure higher than atmospheric pressure has a form of brightly lit plasma channels with high current intensity and low voltage. The generated electric spark leads to avalanche ionization of gas molecules as a result of which the electrical resistance along the channel is low. The spark is accompanied by a sound wave, high emission of light from the plasma channel and high temperature (ca. 10,000 K). The flow of charges leads to the equalization of potentials which terminates the discharge. The energy attained in the method according to the invention is higher than enthalpy of CO₂ formation and causes permanent separation of component atoms through loss of stability of bonds followed by the cleavage thereof leading to separation of a cation (C⁴⁺, CO²⁺) from oxygen anion (O²⁻) through a phase of free CO formation from CO₂ or of complete separation into C and O₂.

The invented method of dissociation of exhaust gases and the reactor chamber to apply this method are explained in more detail on an example of the embodiment of the invention and illustrated on the drawings, where:
- fig. 1 shows a block diagram of the system for the gases electro-dissociation;
- fig. 2 presents construction scheme of the reactor chamber;
- fig. 3 shows schematically the electrode;
- fig. 4 illustrates serial connection of individual reactor chambers, and
- fig. 5 shows the reactor chambers connected in parallel.

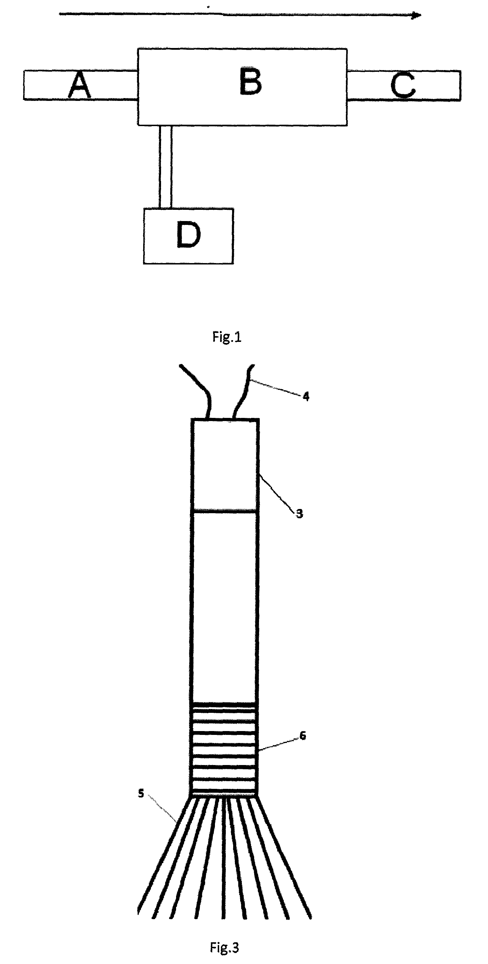

The method according to the invention is effected in a system shown schematically in Fig. 1 comprising a combustion gas entry system A, reactor chamber B, gas discharge system C, solids collector D in the form of, for instance, a drawer or a chute, and a power supply Z for the electrodes.

Gases formed in the combustion process are introduced under the pressure of from 1.1 to 2.0 MPa by means of tight conduits (the shape and construction material of which is irrelevant to the process) into a system of airtight reactor chambers B equipped with multi-head electrodes 2. The pressure under which the gas is introduced into the reactor chambers depends on the technological process in which CO₂ is formed. The reactor chambers have the form of panels, preferably cuboid in shape, with multi-head electrodes fitted in the walls of said chambers by means of screwing into threaded holders, fastening in snap fasteners or in push-fit fasteners arranged over as large surface area as possible. The holders are fused into the housing 1 of the reactor chamber B.

The products of dissociation having the form of solids fall to the bottom of the reactor chamber and are removed therefrom, e.g. by emptying the drawer. Oxygen and undissociated oxides are removed from the system under pressure and recycled to the combustion process, returned to the reactor system and/or subjected to the process of separating oxygen from other compounds.

Walls of the reactor chambers are fitted on its internal side with electrodes 2 with multi-head tips in the form of wire brush 5 forming the cathode, whereas anode is the opposite wall of the housing made of metal of high electrical conductivity insulated on the outside to avoid electrical puncture. This system enables multiplication of electrical discharges. The distances between the electrodes depend on the size of the reactor and on the voltage and current applied in the process and range from 50 mm to 200 mm.

Direct voltage is applied in the process. The size of the reactor depends on the quantity of CO₂ that needs to be dissociated into C and O₂ rather than on the voltage. The more CO₂ needs to be dissociated, the larger must be the reactor dimensions, therefore a modular design of the reactors has been proposed. When there is a need to dissociate a larger quantity of CO₂, an additional reactor module is installed.

The method of dissociating combustion gases consists in introducing the gases formed in the combustion process into a combustion gas entry system A, wherefrom the gas, upon pressurizing it to a pressure by 0.1-1.0 MPa higher than atmospheric pressure, is fed to a reactor chamber B which is supplied via a supply system Z with direct current at a preferable voltage of from 100 MV to 120 MV and preferable current intensity of from 20 mA to 60 mA, as a result of which molecules of the gas are excited and promoted to a higher energy level, which leads to electrical discharges, ionization and consequently to recombination of ions and electrons. The gases remaining after the dissociation, such as oxygen, unreacted: carbon dioxide, carbon monoxide, nitrogen oxides, sulphur oxides and other oxides, are removed via a gas discharge system C, while the carbon formed is recovered after it falls to the bottom of the reactor and is removed via a chute to containers D arranged under the reactor. Carbon removal is conducted periodically, during which gas supply to the reactor is stopped. As carbon removal is completed within a short time, no longer than 5 seconds, there is no need to interrupt the operation of the system apart from momentary reduction of combustion gas supply.

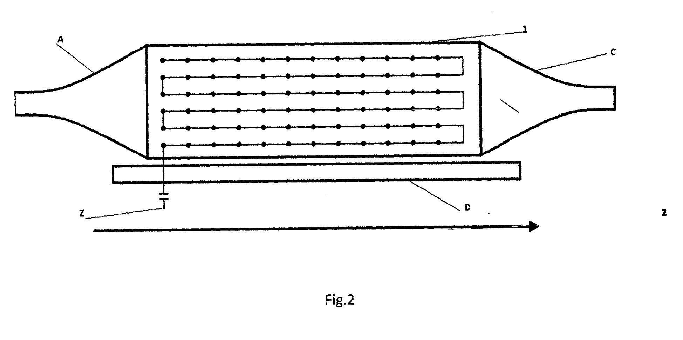

The reactor, shown in Fig. 2, has a cuboid housing 1, the walls of which is fitted with rows of multi-head electrodes 2, cylindrical in shape, one end 3 of which is fastened to the reactor wall detachably, in a snap, threaded or push-fit fastener, whereas the other end 6 of electrodes 2 with brushes 5 is positioned at a certain distance from the opposite wall.

The electrode, as shown in Fig. 3, has the shape of a cylinder the length of which is many times larger than its diameter. First end 3 of the electrode has a connection 4 to the power source Z. Second end 6 is fitted with an insulating element and a wire bundle for flinging electrical discharges, the said wire bundle having the shape of a brush 5.

The reactor panels can be combined in a series or parallel configuration, and the number and manner of connecting thereof depends only on the desired process efficiency, volume of combustion gases and available space. In a parallel configuration the panels can be arranged in a vertical stack, resulting in small footprint of the system. The manner of connecting has no effect on the course of the dissociation process.

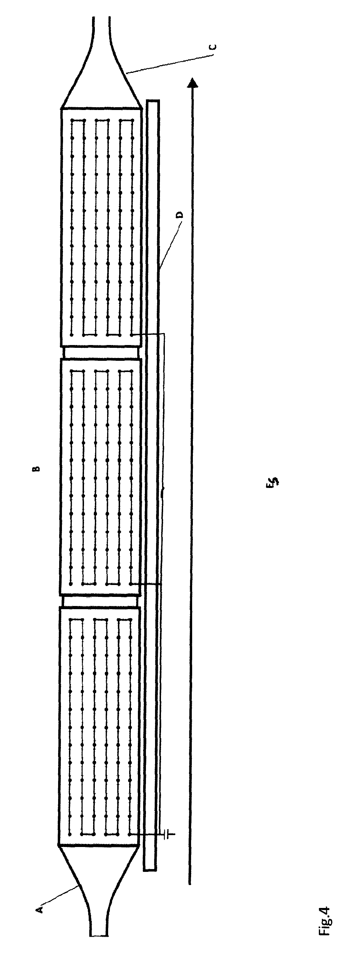

The method of dissociation of combustion gases, according to one variant of the invention, can be implemented in a system of reactors connected in series, as shown in Fig. 4, wherein gases formed in a combustion process are introduced through a combustion gas entry system A into the first reactor chamber B, after which gases that have not reacted in the first stage are fed to the second reactor chamber and, if necessary, to the third reactor chamber, and the dissociation products are removed via the gas discharge system C. The series system of reactors has a combustion gases entry system A, a common power supply Z, a common collection system D for solids, e.g. carbon, and a common gas discharge system C. The individual reactor chamber modules are connected by means of series connectors Es. The number of reactors in the system depends on the desired output of the system. A number of independent systems can be operated, each comprising from one to a dozen or so reactors.

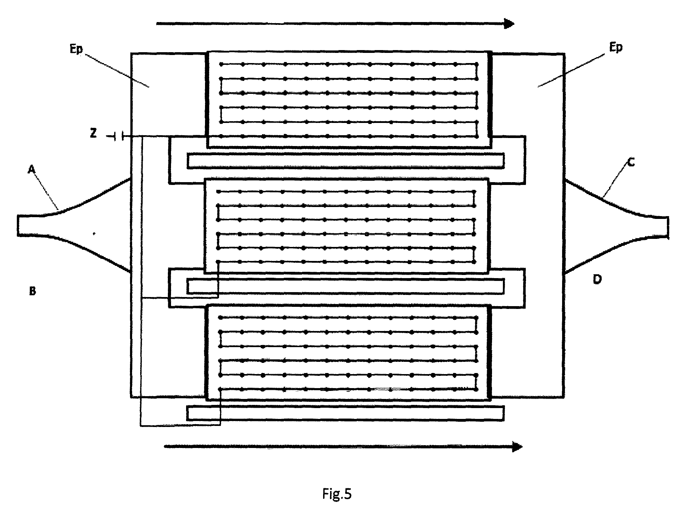

The method of dissociation of combustion gases, according to the invention, can be implemented in a system of reactors connected in parallel, as shown in Fig. 5. Every reactor chamber B in the parallel system has separate power supplies Z, which are connected in series or in parallel, and separate carbon removal systems D. The combustion gas entry system A and gas discharge system C are common to all reactor chambers. The individual reactor chambers B are connected by means of parallel connectors Ep.

## Claims

1. A method of dissociation of exhaust gases, in particular of gases containing carbon dioxide (CO₂), **characterized in that** the exhaust gases are directed into the reactor chamber (B) provided with the electrodes (2) and are subjected to electric discharges causing their dissociation, and the solids obtained from dissociated gases are collected at the bottom of the reactor chamber.

2. The method according to claim 1 **characterized in that** the electric discharges occur between the pairs of electrodes.

3. The method according to claim 1 **characterized in that** the electric discharges occur between the electrodes and the metallic housing (1) of the reactor chamber.

4. The method according to claim 1 or 2 or 3 **characterized in that** the electric discharges are generated by the voltage comprised in a range from 10 MV to 150 MV, preferably from 100 MV to 120 MV, and the electric current comprised in a range from 5 mA do 100 mA, preferably from 20 mA to 60 mA.

5. The method according to any of preceding claims **characterized in that** the frequency of the electric discharges is comprised in a range from 3 to 50 discharges per second.

6. The method according to any of preceding claims **characterized in that** the pressure of the exhaust gases at the input (A) of the reactor chamber is higher than the atmospheric pressure by 0.1 MPa to 1.0 MPa.

7. The method according to any of preceding claims **characterized in that** the solids are collected in a container (D), advantageously a drawer, which is emptied automatically, in preset time intervals or when full, or if decrease of efficiency of dissociation has been detected.

8. The method according to any of preceding claims **characterized in that** the reactor chambers are connected in the serial chains.

9. The method according to any of preceding claims **characterized in that** the reactor chambers or the serial chains of the reactor chambers are connected in parallel.

10. The method according to any of preceding claims **characterized in that** the substances that have not been dissociated are recycled into the reactor chambers.

11. A reactor chamber **characterized in that** the electrodes (2) are mounted inside the housing (1) of the reactor chamber (B) and isolated from this housing, and wherein the electrodes are connected in series.

12. The reactor chamber according to claim 12 **characterized in that** the electrodes are built from cylinders with the first ends (3) mounted separately to the reactor chamber housing (1), in particular with snap, or threaded, or push-in joints, and the second ends (6) provided with an isolating element and the wire brushes (5), and wherein the connectors (4) at the first ends of the electrodes are connected to the voltage source (Z).

13. The reactor chamber according to claim 12 or 13 **characterized in that** the housing is made from a corrosion-resistant metal, preferably austenitic stainless steels with high content of chromium, and wherein the housing is preferably coated with titanium.

14. The reactor chamber according to claim 12 or 13 or 14 **characterized in that** the distance between the electrodes is comprised in a range from 50 mm to 200 mm.
